Europäisches Patentamt

European Patent Office

Office européen des brevets

(11) Numéro de publication: **0 330 552**
**A2**

## (12) DEMANDE DE BREVET EUROPEEN

(21) Numéro de dépôt: **89400447.2**

(51) Int. Cl.⁴: **G 01 B 5/00**

(22) Date de dépôt: **17.02.89**

(30) Priorité: **23.02.88 FR 8802109**

(43) Date de publication de la demande:
**30.08.89 Bulletin 89/35**

(84) Etats contractants désignés:
**DE ES FR GB IT SE**

(71) Demandeur: **RENAULT AUTOMATION**
**8/10 avenue Emile Zola**
**F-92109 Boulogne-Billancourt (FR)**

(72) Inventeur: **David, Jean-Marie**
**67, Allée de la Crémaillère**
**F-59650 Villeneuve d'Ascq (FR)**

(74) Mandataire: **Saint Martin, René et al**
**Régie Nationale des Usines Renault 8 & 10, avenue Emile Zola**
**F-92109 Boulogne Billancourt (FR)**

(54) Machine a mesurer par coordonnées.

(57) Machine à mesurer par coordonnées ayant 1 à n axes de mesure comprenant un support de pièce et au moins un chariot se déplaçant sur un axe de mesure, un dispositif de palpage équipant un chariot, caractérisée par le fait que chaque axe comporte une structure porteuse (1, 2) et une structure de référence métrologique (11, 21) associée à des capteurs de position (23, 24, 33), ces deux structures étant reliées par une liaison isostatique, lesdits capteurs déterminant la position de la structure de référence de rang n par rapport à la structure de référence de l'axe de mesure de rang n-1.

EP 0 330 552 A2

## Description

## MACHINE A MESURER PAR COORDONNEES

La présente invention se rapporte à une machine à mesurer par coordonnées ayant 1 à n axes de mesure, comprenant un support de pièces et au moins un chariot se déplaçant sur un axe de mesure, un dispositif de palpage équipant un chariot.

Les machines du type ci-dessus comprennent généralement 3 axes de mesure. La définition et les configurations matérielles de réalisation sont données par la norme française NF 11-150 et les documents étrangers équivalents. Les éléments des glissières des machines qui constituent une référence métrologique assurent simultanément la fonction de support de la pièce et des mobiles, ce qui ne peut pas s'effectuer sans déformation.

La présente invention a pour but de fournir une machine à structure porteuse et à structure métrologique dissociées. Les éléments de la chaîne métrologique sont reliés à la structure de support par des liaisons isostatiques complètes incapables d'imposer des déformations aux structures métrologiques.

Conformément à l'invention, la machine est caractérisée par le fait que chaque axe comporte une structure porteuse et une structure de référence métrologique associée à des capteurs de position, ces deux structures étant reliées par une liaison isostatique, lesdits capteurs déterminant la position de la structure de référence de rang n par rapport à la structure de référence de l'axe de rang n - 1.

Selon une caractéristique, la structure de référence métrologique de l'axe de mesure de rang 1 et reliée isostatiquement au support de la pièce à mesurer.

Selon une caractéristique, chaque structure porteuse sert au guidage d'un chariot mobile portant lui-même une structure porteuse pour l'axe suivant.

Selon une caractéristique, pour un axe, la machine comporte un capteur de déplacement suivant l'axe de mesure et cinq capteurs de déplacement linéaire permettant de définir les mouvements du mobile par rapport à la structure de référence.

Selon une caractéristique, la position de la structure de référence de rang n, liée isostatiquement au mobile de rang n, est déterminée par rapport à la structure de référence de rang n - 1 par un ensemble de six capteurs de position.

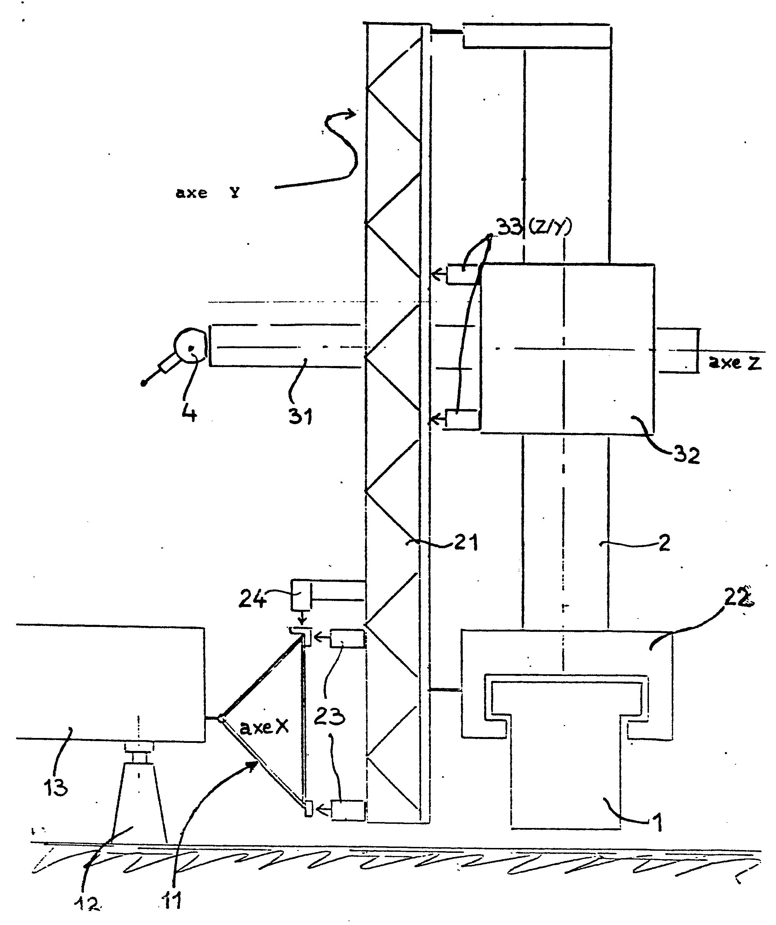

L'invention va maintenant être décrite avec plus de détails en se référant à un mode de réalisation donné à titre d'exemple et représenté par le dessin annexé sur lesquel :

- La figure unique représente une machine à mesurer à bras horizontal selon l'invention,

En se référant au dessin, la machine comprend 3 axes de mesure dont le premier X est horizontal, le second Y vertical et le troisième Z orthogonal aux deux premiers.

L'axe X comporte une structure porteuse de guidage sur laquelle se déplace un chariot ou coulisseau mobile 22 et une structure de référence métrologique 11.

Le support 13 de la pièce à mesurer est relié à la structure de référence métrologique 11 déterminant l'axe de mesure X. Le porte pièce 13 et la structure de référence 11 sont reliés l'une à l'autre par une liaison isostatique. Le porte pièce est fixé au sol par une structure de support 12.

L'axe de mesure Y comprend une structure porteuse de guidage 2 sur laquelle se déplace un chariot ou coulisseau mobile 32 et une structure de référence métrologique 21.

La structure porteuse 2 de l'axe en Y se déplace en X par l'intermédiaire d'un chariot 22 sur la structure 1. La structure de référence métrologique 21 est reliée à la structure porteuse 2 par une liaison isostatique. Cette structure 21 porte des capteurs de position 23 et 24 palpant la structure de référence 11 relative à l'axe X.

Le chariot 32 se déplace sur la structure porteuse de guidage 2. Il porte le bras horizontal 31 qui se déplace horizontalement en Z et porte à son extrêmité la tête de palpage 4. La structure porteuse de guidage constituée par 32 porte des capteurs de position 33 palpant la structure de référence 21 relative à l'axe Y.

Les différentes structures de référence métrologiques 11, 21 sont réalisées en treillis. Pour une insensibilité maximale aux perturbations de l'ambiance, chaque structure de référence métrologique est de préférence constituée par un treillis en métal ou alliage à dilatation nulle ou faible. Un matériau approprié est connu sous la marque INVAR.

La position de chaque mobile sur son axe est entièrement déterminée par un ensemble de 6 capteurs en relation avec la structure de référence :
- 1 capteur de déplacement suivant l'axe de mesure (linéaire ou rotatif selon le cas),
- 5 capteurs de déplacement linéaire (du type comparateur) permettant de définir les mouvements du mobile par rapport à la structure de référence selon les 5 autres degrés de liberté.

Ainsi, dans une machine comportant n axes, la position de la structure de référence de rang n, liée isostatiquement au mobile de rang n, est déterminée par rapport à la structure de référence de rang n-1 par un ensemble de 6 capteurs de position.

Il est bien entendu que l'on peut, sans sortir du cadre de l'invention, imaginer des variantes et des perfectionnements de détails et de même envisager l'emploi de moyens équivalents.

## Revendications

1°) Machine à mesurer par coordonnées ayant 1 à n axes de mesure comprenant un support de pièce et au moins un chariot se déplaçant sur un axe de mesure, un dispositif de palpage équipant un chariot, caractérisée par le fait que chaque axe comporte une structure porteuse (1, 2) et une structure de référence métrologique (11, 21) associée à des capteurs de position (23, 24, 33), ces deux structures étant reliées par une liaison isostatique, lesdits capteurs déterminant la position de la structure de référence de rang n par rapport à la structure de référence de l'axe de mesure de rang n-1.

2°) Machine selon la revendication 1, caractérisée par le fait que la structure de référence métrologique (11) de l'axe de mesure de rang 1 est reliée isostatiquement au support (13) de la pièce à mesurer.

3°) Machine selon l'une quelconque des revendications précédentes, caractérisée par le fait que chaque axe de mesure comporte 6 capteurs en relation avec la structure de référence.

4°) Machine selon l'une quelconque des revendications précédentes, caractérisée par le fait que chaque structure de référence métrologique est constituée par un treillis en métal à faible dilatation.

5°) Machine selon l'une quelconque des revendications précédentes, caractérisée par le fait que chaque structure porteuse (1, 2) sert au guidage d'un chariot mobile (22, 32) portant lui-même une structure porteuse pour l'axe suivant.

6°) Machine selon l'une quelconque des revendications précédentes, caractérisée par le fait que, pour un axe, elle comporte un capteur de déplacement suivant l'axe de mesure et cinq capteurs de déplacement linéaire permettant de définir les mouvements du mobile par rapport à la structure de référence.

7°) Machine selon l'une quelconque des revendications précédentes, caractérisée par le fait que la position de la structure de référence de rang n, liée isostatiquement au mobile de rang, est déterminée par rapport à la structure de référence de rang n - par un ensemble de six capteurs de position.

axe Y

33 (Z/Y)

axe Z

4    31    32

21    2

24    22

axe X    23

13    1

12    11